**Europäisches Patentamt**

**European Patent Office**

**Office européen des brevets**

(11) Veröffentlichungsnummer: **0 094 667**
**B1**

(19)

(12) # EUROPÄISCHE PATENTSCHRIFT

(45) Veröffentlichungstag der Patentschrift:
02.09.87

(51) Int. Cl.⁴: **G 01 S 13/78**

(21) Anmeldenummer: **83104813.7**

(22) Anmeldetag: **16.05.83**

(54) Antennensystem für einen Sekundärradar-Transponder.

(30) Priorität: **18.05.82 DE 3218689**

(43) Veröffentlichungstag der Anmeldung:
**23.11.83 Patentblatt 83/47**

(45) Bekanntmachung des Hinweises auf die Patenterteilung:
**02.09.87 Patentblatt 87/36**

(84) Benannte Vertragsstaaten:
**BE DE FR GB IT NL**

(56) Entgegenhaltungen:
**DE-A-2 629 502**
**DE-A-2 921 856**
**FR-A-2 357 078**
**US-A-3 019 438**
**US-A-3 524 189**
**US-A-3 916 414**

**Interavia, 1980, Heft 3, Seiten 201-205, D BOYLE**
**"Das Freund-Feind-Identifizierungssystem der**
**Nato"**

(73) Patentinhaber: **Siemens Aktiengesellschaft Berlin**
**und München, Wittelsbacherplatz 2, D-8000**
**München 2 (DE)**

(72) Erfinder: **Brunner, Anton, Dipl.- Ing.,**
**Nussbaumstrasse 2a, D-8136 Wangen/Starnberg**
**(DE)**

## Beschreibung

Die Erfindung bezieht sich auf einen Sekundärradar-Transponder mit einem Antennensystem, bei dem zum Empfang eines Abfragesignals eine eine Rundstrahlcharakteristik aufweisende Empfangsantenne für 45°-Linearpolarisation und zur Abgabe von Antwortsignalen mit einer festgelegten Polarisation, insbesondere mit vertikaler Linearpolarisation, eine rundstrahlende, für die festgelegte Polarisation ausgelegte Schmalband-Sendeantenne vorgesehen ist.

Es ist üblich, Sekundärradar-Transponder-Antennensysteme so auszulegen, daß deren Empfangsantenne für das Abfragesignal bei einer festen Frequenz (1030 MHz) mit vertikaler Polarisation und deren Sendeantenne für das Antwortsignal bei einer benachbarten festen Frequenz (1090 MHz) mit vertikaler Polarisation schmalbandig geeignet sind.

Aus der DE-A1-23 54 550 ist eine Doppelrundstrahlantenne für einen Sekundärradar-Transponder bekannt. Die beiden, auf unterschiedlichen Frequenzen arbeitenden Antennen sind auf einer Achse übereinander in zwei Abschnitten in Doppelkoaxialleitungsbauweise aufgebaut, wobei je nach Wahl sowohl der untere als auch der obere Abschnitt entweder als Unipol für vertikale Polarisation oder als mit einem Schlitz und eventuell mit einem Kurzschlußstift versehener Strahler für horizontale Polarisation schmalbandig ausgebildet sein kann. Bei der aus der DE-A1-26 29 502 bekannten Mehrfach-Rundstrahlantenne für Sekundärradar-Transponder verlaufen die Schlitze in einem der Strahler nicht horizontal oder vertikal, sondern unter 45 Grad, so daß schmalbandig elektromagnetische Wellen mit 45 Grad-Linearpolarisation von diesem Rundstrahler abgegeben werden.

Bei neuen IFF-(Freund/Feind-)Kennsystemen ist neben der Abfrage bei einer festen Frequenz (1030 MHz) auch die Abfrage über ein Signal vorzusehen, das innerhalb großer Grenzen in einem frequenzhöheren Band liegen kann. Dies ermöglicht die Abfrage über das Radarsignal von hinsichtlich der Frequenz unterschiedlichen Radargeräten. Bekannt sind derartige IFF-Systeme aus DE-A1-2 921 856 und dem Aufsatz von D.Boyle: "Das Freund-Feind-Identifizierungssystem der NATO" in der Zeitschrift "Interavia", 1980, Heft 3, Seite 201 bis 205. Da Radargeräte mit verschiedenen Polarisationen arbeiten können, sollte also auch bei der Auslegung der Transponder-Empfangsantenne berücksichtigt werden, daß die verschiedenen Polarisationen der Radargeräte breitbandig empfangen werden können.

Der Erfindung liegt demnach die Aufgabe zugrunde, einen Sekundärradar-Transponder mit einem Antennensystem zu schaffen, das einen Sekundärradarbetrieb bzw. eine Freund/Feind-Abfrage (IFF) ermöglicht, wobei außer mit der üblichen festen Frequenz noch mit unterschiedlichen Polarisationen und bei unterschiedlichen Frequenzen abgefragt und bei einer festen Frequenz mit festgelegter, z. B. vertikaler Polarisation geantwortet wird.

Gemäß der Erfindung, die sich auf einen Sekundärradar-Transponder der eingangs genannten Art bezieht, wird diese Aufgabe dadurch gelöst, daß die Empfangsantenne eine Breitbandantenne ist, deren zu überdeckendes Frequenzband oberhalb des engen Frequenzbereichs der Schmalband-Sendeantenne liegt daß der Transponder mit einem ersten, breitbandig ausgelegten Empfangskanal an die Breitband-Empfangsantenne angeschlossen ist und daß der Transponder einerseits mit einem zweiten, schmalbandig ausgelegten Empfangskanal und andererseits mit einem von den beiden Empfangskanälen angesteuerten Antwortsender unter Zwischenschaltung eines Sende/Empfangs-Schalters, z. B. eines Zirkulators, mit der Schmalband-Sendeantenne verbunden ist, wodurch die Schmalband-Sendeantenne (9) des Transponders außer zum Senden der Antwortsignale auch zum Empfangen von Abfragesignalen in diesem Schmalband-Frequenzbereich verwendet wird. Die bei den Radargeräten üblichen Polarisationen, nämlich linear horizontal, linear vertikal sowie zirkular rechts- und linksdrehend, werden mit der Breitband-Empfangsantenne unabhängig vom Einfallswinkel mit einem Polarisationsverlust von nur 3 dB empfangen. Die schmalbandige Antwort wird vom Transponder durch die mit der Empfangsantenne kombinierte Sende-Rundstrahlantenne mit der festgelegten Polarisation, z. B. der vertikalen Polarisation, ausgestrahlt und von einer entsprechend polarisierten Schmalband-Richtantenne am Abfragegerät empfangen.

Ein gemäß der Erfindung ausgebildeter Transponder hat den Vorteil, daß auch im Schmalbandbereich eine Abfrage durchgeführt werden kann.

Die Breitband-Empfangsantenne und die Schmalband-Sendeantenne des Transponders sind in zweckmäßiger Weise baulich voll integriert.

Für den Fall, daß die Breitband- und Schmalband-Transponderantennen voll integriert sind, d.h. nur einen einzigen Speiseanschluß aufweisen, werden die Frequenzbänder in zweckmäßiger Weise durch eine Frequenzweiche voneinander getrennt.

Die Erfindung wird im folgenden anhand von zwei Figuren erläutert. Es zeigen

Fig. 1 schematisch die Polarisationen eines neuen Sekundärradar(IFF)-Antennensystems,

Fig. 2 ein Blockschaltungsbeispiel für ein Transponder-Antennensystem nach der Erfindung.

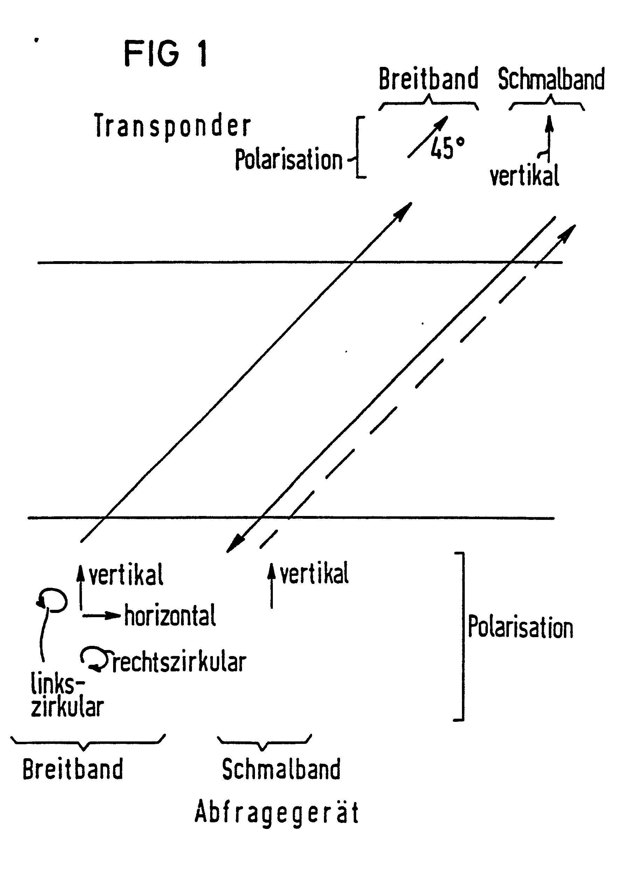

In Fig. 1 sind unten die Polarisationen für das Abfragegerät eines neuen Freund-Feind-Kennsystems schematisch dargestellt. Neben der Abfrage bei einer festen Frequenz mit fester vertikaler Polarisation (in Fig. 1 gestrichelt dargestellt) ist auch eine Abfrage über ein Signal vorgesehen, welches innerhalb weit auseinanderliegender Grenzen bei beliebigen Frequenzen liegen kann und das beliebig polarisiert sein kann. Als Beispiel sind die Breitband-Abfragesignale in vertikaler und horizontaler Linearpolarisation sowie in linkszirkularer und rechtszirkularer Polarisation dargestellt (durchgezogen dargestellter Pfeil von links unten nach rechts oben). Der Transponder muß ein Antennensystem aufweisen, das in der Lage ist, die verschiedenen Polarisationen zu empfangen. Der in Fig. 7 rechts oben schematisch angedeutete Transponder ist zu diesem Zweck mit einer Empfangsantenne ausgerüstet, die unabhängig vom Einfallswinkel eine 45 Grad-Polarisation aufweist. Diese Empfangsantenne ist breitbandig ausgebildet. Die vom Abfragegerät mit deren Breitband-Antenne aussendbaren Polarisationen, nämlich die horizontale und die vertikale Linearpolarisation sowie die rechtsdrehende und die linksdrehende Zirkularpolarisation, werden mit dieser 45-Grad-linearpolarisierten Antenne des Transponders mit lediglich 3 dB Polarisationsverlust empfangen. Die schmalbandige Antwort wird vom Transponder durch eine vertikal polarisierte Rundstrahlantenne ausgestrahlt und von einer vertikal polarisierten Schmalband-Richtantenne am Abfragegerät empfangen (durchgezogen dargestellter Pfeil von rechts oben nach links unten). Der Schmalband-Frequenzbereich liegt außerhalb, in zweckmäßiger Weise unterhalb des Breitband-Frequenzbereiches.

Wenn im Schmalbandbereich eine Abfrage durchgeführt werden soll, wie dies durch den gestrichelt dargestellten Pfeil symbolisiert ist, so erfolgt diese über die jeweils vertikal polarisierte Antenne des Abfragegerätes und des Transponders.

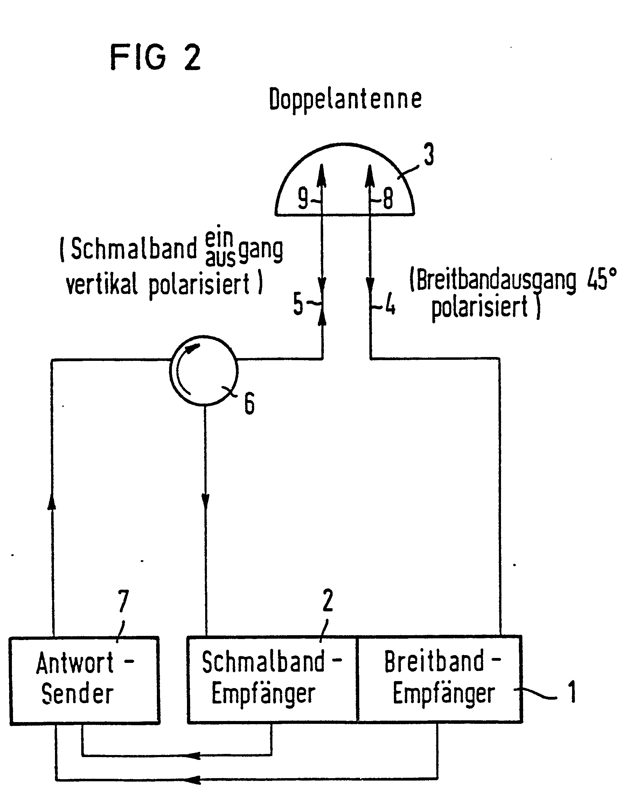

Fig. 2 zeigt ein Beispiel für ein Transponder-Antennen-System nach der Erfindung in einem Blockschaltbild. Der Transponder besteht hierbei empfangsseitig aus einem Breitband-Empfänger 1 und einem Schmalband-Empfänger 2. Jeder dieser beiden Empfänger 1 und 2 ist einem Ausgang einer integrierten Transponder-Doppelantenne 3 zugeordnet. Der Ausgang 4 gehört zu einer rundstrahlenden Breitband-Empfangsantenne 8, die für 45-Grad-Linearpolarisation ausgebildet ist. Der Ausgang 5 ist dagegen mit einer rundstrahlenden Schmalband-Sendeantenne 9 für vertikale Linearpolarisation verbunden. Über den Ausgang 5 wird die schmalbandige Antwort des Transponders ausgestrahlt. Im dargestellten Beispiel kann auch im Schmalbandbereich eine Abfrage erfolgen, nämlich mittels des Schmalband-Empfängers 2, welcher über einen Zirkulator 6 an den Ausgang 5 der Transponder-Doppelantenne 3 angeschaltet wird. Ein von den Empfängern 1 und 2 angesteuerter Antwortsender 7 wird ebenfalls über den Zirkulator 6 mit dem Schmalband-Eingang 5 der Transponder-Doppelantenne 3 verbunden. Die schmalbandige vertikalpolarisierte Antenne 9 dient somit zugleich sowohl als Sende- als auch als Empfangsantenne. Diese beiden Funktionen werden durch die beiden entgegengesetzt gerichteten Pfeile in der Ausgangs- bzw. Eingangsleitung 5 angedeutet. Sind in der Transponder-Doppelantenne 3 die rundstrahlende Breitband-Empfangsantenne 8 und die rundstrahlende Schmalband-Sendeantenne 9 voll ineinander integriert, so daß sie nur eine einzige Speiseleitung aufweisen, dann lassen sich das schmale und das breite Frequenzband durch eine Frequenzweiche voneinander trennen. Es entstehen dann wieder die beiden Anschlußleitungen 4 und 5 für die Breitband- bzw. für die Schmalbandsignale.

**Patentansprüche**

1. Sekundärradar-Transponder mit einem Antennensystem, bei dem zum Empfang eines Abfragesignals eine eine Rundstrahlcharakteristik aufweisende Empfangsantenne (8) für 45°-Linearpolarisation und zur Abgabe von Antwortsignalen mit einer festgelegten Polarisation, insbesondere mit vertikaler Linearpolarisation, eine rundstrahlende, für die festgelegte Polarisation ausgelegte Schmalband-Sendeantenne (9) vorgesehen ist, dadurch gekennzeichnet, daß die Empfangsantenne (8) eine Breitbandantenne ist, deren zu überdeckendes Frequenzband oberhalb des engen Frequenzbereichs der Schmalband-Sendeantenne (9) liegt daß der Transponder mit einem ersten, breitbandig ausgelegten Empfangskanal (1) an die Breitband-Empfangsantenne (8) angeschlossen ist und daß der Transponder einerseits mit einem zweiten, schmalbandig ausgelegten Empfangskanal (2) und andererseits mit einem von den beiden Empfangskanälen angesteuerten Antwortsender (7) unter Zwischenschaltung eines Sende/Empfangs-Schalters (6), z. B. eines Zirkulators, mit der Schmalband-Sendeantenne (9) verbunden ist, wodurch die Schmalband-Sendeantenne (9) des Transponders außer zum Senden der Antwortsignale auch zum Empfangen von Abfragesignalen in diesem Schmalband-Frequenzbereich verwendet wird.

2. Transponder nach Anspruch 1, dadurch gekennzeichnet, daß die Breitband-Empfangsantenne (8) und die Schmalband-Sendeantenne (9) des Antennensystems baulich integriert sind.

3. Transponder nach Anspruch 2, dadurch gekennzeichnet, daß bei voller baulicher Integration der Breitband-Empfangsantenne (8) und der Schmalband-Sendeantenne (9) des Antennensystems und bei Vorhandensein nur eines einzigen Speiseanschlusses eine Frequenzweiche zur Trennung der Frequenzbänder vorgesehen ist.

## Claims

1. A secondary radar transponder with an antenna system having an omni-directional receiving antenna (8) for 45° linear polarisation provided for the reception of an interrogation signal, and an omni-directional narrow-band transmitting antenna (9) designed for the specified polarisation is provided for the emission of response signals having a specified polarisation, in particular vertical linear polarisation, characterised in that the receiving antenna (8) is a wide-band antenna covering a broad frequency band that lies above the narrow frequency band of the transmitting antenna (9), that the transponder is connected by a first, wide-band receiving channel (1) to the wide-band receiving antenna (8), and that the transponder is connected to the narrow-band transmitting antenna (9) by a second, narrow-band receiving channel (2) and by a responder transmitter (7) driven by the two receiving channels via a transmitting/receiving switch (6), e.g. a circulator, as a result of which the narrow-band transmitting antenna (9) of the transponder is used to transmit the response signals and also to receive response signals in this narrow-band frequency, range.

2. A transponder as claimed in Claim 1, characterised in that the wide-band receiving antenna (8) and the narrow-band transmitting antenna (9) of the antenna system are structurally integrated.

3. A transponder as claimed in Claim 2, characterised in that if the wide-band receiving antenna (8) and the narrow-band transmitting antenna (9) of the antenna system are fully integrated structurally, and only one single supply terminal exists, a frequency-separating filter is provided for the separation of the frequency bands.

## Revendications

1. Transpondeur de radar secondaire comportant un système d'antennes et dans lequel il est prévu pour la réception d'un signal d'interrogation, une antenne réceptrice (8) possédant une caractéristique omnidirectionnelle, pour une polarisation linéaire à 45°, et pour la délivrance de signaux de réponse avec une polarisation fixe, notamment une polarisation linéaire verticale, une antenne émettrice omnidirectionnelle à bande étroite (9) conçue pour la polarisation fixe, caractérisé par le fait que l'antenne réceptrice (8) est une antenne à large bande, dont la bande de couverture en fréquences se situe au-dessus de la bande étroite des fréquences de l'antenne émettrice à bande étroite (9), que le transpondeur est raccordé, par un premier canal de réception (1) à large bande, à l'antenne réceptrice à large bande (8), et que le transpondeur est relié d'une part au moyen d'un second canal de réception (2) à bande étroite et d'autre part au moyen d'un émetteur de réponse (7) commandé par les deux canaux de réception, à l'antenne émettrice à bande étroite (9), moyennant le montage intercalé d'un commutateur émission/réception (6), par exemple un circulateur, ce qui a pour effet que l'antenne émettrice à bande étroite (9) du transpondeur est utilisée non seulement pour l'émission des signaux de réponse, mais également pour la réception de signaux d'interrogation dans cette plage de fréquences à bande étroite.

2. Transpondeur selon la revendication 1, caracterisé par le fait que l'antenne réceptrice à large bande (8) et l'antenne émettrice à bande étroite (9) du système d'antennes sont intégrées du point de vue construction.

3. Transpondeur suivant la revendication 2, caractérisé par le fait que dans le cas d'une intégration complète du point de vue construction de l'antenne réceptrice à large bande (8) et de l'antenne émettrice à bande étroite (9) du système d'antennes et dans le cas de la présence d'un seul raccord d'alimentation, il est prévu un filtre d'aiguillage servant à séparer les bandes de fréquences.

FIG 1

Transponder

Polarisation — [ Breitband: 45°  Schmalband: vertikal ]

vertikal
horizontal
linkszirkular
rechtszirkular
vertikal

Polarisation

Breitband   Schmalband

Abfragegerät

# FIG 2

Doppelantenne

3

9 8

(Schmalband ein/aus gang
vertikal polarisiert)

(Breitbandausgang 45°
polarisiert)

5 4

6

7

2

| Antwort -
Sender | Schmalband -
Empfänger | Breitband -
Empfänger | 1 |

3